Europäisches Patentamt

European Patent Office

Office européen des brevets

(11) Publication number: **0 493 796 A1**

## EUROPEAN PATENT APPLICATION

(21) Application number: **91122239.6**

(22) Date of filing: **27.12.91**

(51) Int. Cl.5: **G02B 6/36**, G02B 6/44

(30) Priority: **03.01.91 NO 910011**

(43) Date of publication of application:
**08.07.92 Bulletin 92/28**

(84) Designated Contracting States:
**DE DK ES FR GB GR IT NL SE**

(71) Applicant: **ALCATEL STK A/S**
**Ostre Aker vei 33**
**N-0508 Oslo 5(NO)**

(72) Inventor: **Betten, Einar**
**Statsrad Mathiesens vei 6 A**
**N-083 Oslo 5(NO)**

(74) Representative: **Pohl, Herbert, Dipl.-Ing**
**Standard Elektrik Lorenz AG Patent- und**
**Lizenzwesen Postfach 30 09 29**
**W-7000 Stuttgart 30(DE)**

(54) **Fibre optic splice box.**

(57) This invention relates to splicing of fibre optic subsea cables and in particular to box units for such splices. The unit (1) comprises termination means for armour wires and for central strength members and a sealed off housing (2) for fibre splices. The armour wires termination means (22) is arranged in pivot heads (4) hinged to the housing (2) and the box unit (1) is provided with box tilting means (31,32).

Fig. 1

The present invention relates to splicing of fibre optic subsea cables and in particular to box units for such splices. Such units usually comprise termination means for armour wires and for central strength members, as well as at least one sealed off housing for fibre splices.

The requirements of subsea fibre optic splices are severe. A splice box should be able to transmit a tensile force almost equal to that allowed for the cable, even when the cable and splice box run over winch pulleys and sheaves.

Known splice boxes are usually bulky and not very suitable for high tensile forces and subsea purposes down to great water depths. The object of the present invention is to improve the design of subsea splice boxes.

The main features of the invention are defined in the claims. The special design allows the splice box unit to transmit a tensile force at about 95% of that allowed for the cable. Both single, double and triple layer armour wire can be terminated in the unit and transmit tensile force. The splice box can be used for water depths to 1.100 meters. Reliable fibre optic splices now require less installation time.

Above mentioned and other features and objects of the present invention will clearly appear from the following detailed description of embodiments of the invention taken in conjunction with the drawings, where

Figures 1 and 2 show exploded views of a splice box unit, and

Figure 3 shows an alternative armour wire termination.

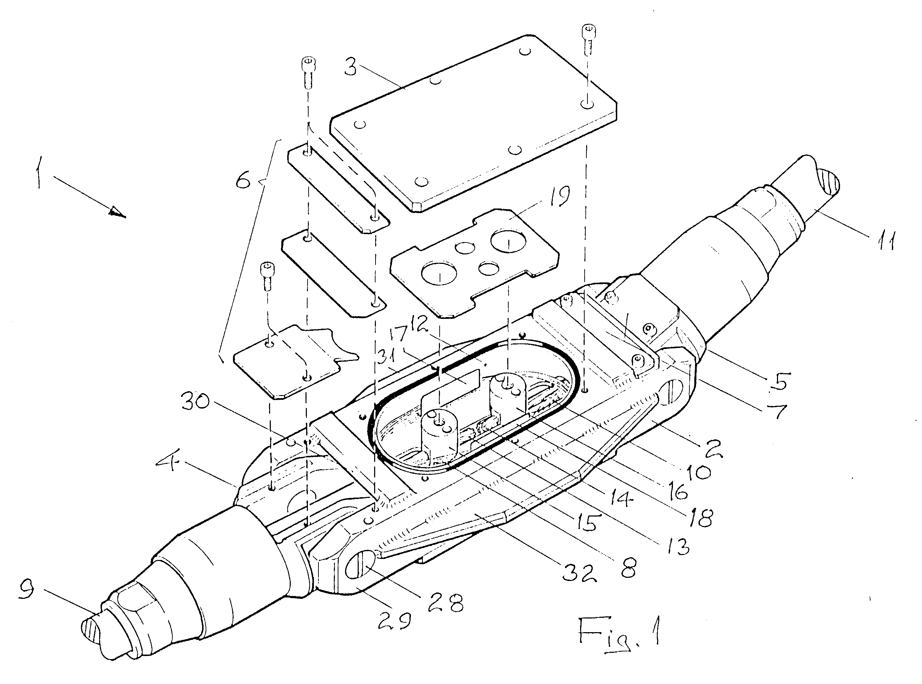

In Figure 1 is illustrated an exploded view of a fibre optic splice box unit 1 showing a splice housing 2, one (of two) lids 3, two pivot heads 4 and 5 and two (of four) cable end protecting arrangements 6 and 7.

The splice housing 2 can be common for all cable types having inner sheaths within a defined range, such as outer diameters between 11.5 and 13 mm. The housing provides a protective enclosure for fibre coils and splices. Fibres 8 from a cable 9 are shown, as well as fibres 10 from a cable 11. The oblong splice chamber is divided in two halves, one chamber 12 as shown and one chamber on the lower side of the housing. In one embodiment of the invention, each side has a capacity of storing up to 24 fibre splices. The half chambers are accessible from each side of the housing and are sealed off with lids 3. The central strength elements 13 and 14, usually made of synthetic material, from both cable ends are terminated and locked inside the housing, with locking means 15 and 16. The fibre splices are arranged behind shields 17,18. After splicing, the chamber is closed with a cork gasket 19 and filled with a compound like silicone oil for protection. Excessive splice chamber compound can be released through vent arrangements (not shown) in the lids.

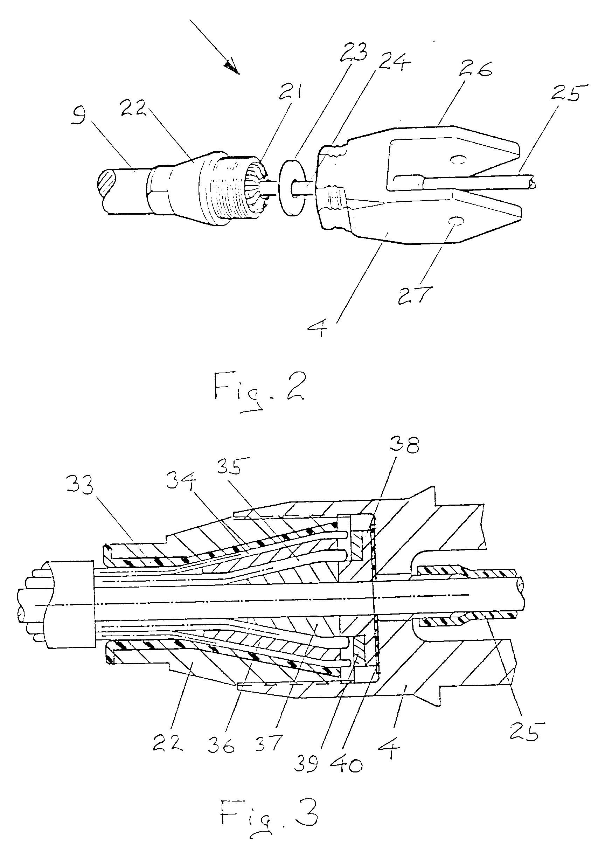

A pivot head assembly 20 is illustrated in an exploded view in Figure 2. Steel armour wires 21 from the cable 9 are locked by means of a cone arrangement in a termination head 22. Different cones and heads allow various cable types to be joined by the splice box unit 1. A simple hand operated hydraulic tool can be used to lock the armour wires within the head 22. The head 22 and the pivot head 4 are provided with insulating layers which insulates the armour wires electrically from parts of the splice 1 which are in contact with sea water, in order to avoid galvanic corrosion of the steel wires. There may be provided an insulation shim 23 for insulating the armour wires from the splice housing 2. The pivot head 4 is screwed onto the termination head 22. In order to protect the surface of the inner sheath 24 of the fibre optic cable, there is provided a shrink sleeve 25 which is fitted to the particular cable type. For protection of the inner sheath 24 there are provided steel/rubber brackets 6 and 7 as illustrated in Figure 1. These brackets are shown assembled at the right hand side of the splice box unit.

When making a splice, the armour wires 21 (one, two or three layers), are terminated within the termination head 22. Such termination of the armour wire layers ensures that the tensile force is transferred from the armour wires of one cable to the other. Possible further armour layer wires can be terminated outside the splice box unit and not contribute to the tensile strength.

The pivot head 4 is the assembled with the termination head 22 and the splice housing 2 before terminating the center members 13-14 and splicing the fibres 8 and 10.

The pivot head 4 (and 5) is provided with a fork shaped structure 26 having pivot holes 27 corresponding with holes 28 in a similar fork shaped structure 29 on the splice housing 2. The housing 2 is provided with means 30 for limiting the angular movement of the fork shaped pivot head 4 about the pivot axis.

The splice box unit 1 is also provided with box tilting means for ensuring that any bending will take place in a plane perpendicular to the two pivot axis. The box tilting means are arranged alongside the housing 2 in the plane of the pivot axis 27/28, in the form of two flat fins 31 and 32 mounted on the side of the housing 2.

The splice housing is designed to withstand a differential pressure of 110 bars, equal to a water depth of some 1.100 meters. The splice chamber is sealed with O-rings. The cable inner sheath 24 entering the splice housing is sealed with a shrinkable EPDM rubber tube 25. Adapters can be used to match different diameters of the cable inner sheath and avoid extrusion of the rubber.

The splice box can be manufactured from high tensile strength sea water resistant steel, highly resistant to pitting and crevice corrosion.

In Figure 3 is shown a cut through an alternative termination of armour wires not requiring bending of the wires. The termination head 22 is provided with a layer of insulation 33 so that the armour wires 34 and 35 are electrically insulated from the pivot head 4. The armour wires are locked within the head 22 by means of two cones 36 and 37. A clamp sleeve 38 which is provided with zinc anode 39 is insulated from the pivot head 4 by means of a shim 40.

It should be noted that a metal free joint can be obtained when the cables are provided with synthetic armour and by making all the main components of the splice box unit from FRP fiber reinforced plastics.

**Claims**

1. Splice box unit for fibre optic subsea cables comprising termination means for armour wires and for strength members, as well as at least one sealed off housing for fibre splices, **characterized in that** the armour wires termination means (22) are arranged in pivot heads (4,5) hinged to the housing (2) and that the box unit (1) is provided with means (31,32) for facilitating tilting of the box to a predetermined orientation.

2. Splice box according to claim 1, **characterized in that** the armour wires (21; 34,35) are electrically insulated from parts of the splice which is in contact with sea water.

3. Splice box according to claim 1 or 2, **characterized in that** the housing (2) is provided with means (29) for limiting the movement of the pivot heads (4,5).

4. Splice box according to claim 1, 2 or 3, **characterized in that** the box tilting means are arranged alongside the housing (2) in the plane of the pivot head axis (27,28).

5. Splice box according to claim 4, **characterized in that** the box tilting means are constituted by two flat fins (31,32) mounted on the side of the housing.

6. Splice box according to claim 2, **characterized in that** the armour wire termination means (22) include a set of cones (36,37) having a corresponding corrosion potential as the armour wires.

7. Splice box according to claim 6, **characterized in that** the armour termination cones (36,37) within the termination means (22) are cathodic corrosion protected by zinc anodes (39).

8. Splice box according to claim 1, **characterized in that** the housing (2) is provided with two oblong splice chambers (12) being accessible and sealable with lids (3) from each side of the housing (2), these sides being parallel to the plane of the pivot head axis (27,28).

9. Splice box according to claim 8, **characterized in that** the lids (3) are provided with vent arrangements through which excessive splice chamber (12) compound can be released.

Fig. 1

Fig. 2

Fig. 3

## DOCUMENTS CONSIDERED TO BE RELEVANT

EP 91122239.6

| Category | Citation of document with indication, where appropriate, of relevant passages | Relevant to claim | CLASSIFICATION OF THE APPLICATION (Int. Cl.5) |
|---|---|---|---|
| A | EP - A - 0 389 206 (STC PLC) * Fig. 1,5-7 * | 1,2,6, 8 | G 02 B 6/36 G 02 B 6/44 |
| A | US - A - 4 753 500 (GUAZZO) * Fig. 1,2; column 5, lines 19-34 * | 1,2,6, 8 | |
| A | US - A - 4 958 903 (COBB et al.) * Fig. 1-3 * | 1,8 | |
| A | US - A - 4 647 719 (CAMPBELL et al.) * Abstract; fig. 1,7,8, 10,11,14 * | 1,9 | |

**TECHNICAL FIELDS SEARCHED (Int. Cl.5)**

G 02 B 6/00
H 02 G 15/00

The present search report has been drawn up for all claims

| Place of search | Date of completion of the search | Examiner |
|---|---|---|
| VIENNA | 25-03-1992 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04011)